# EUROPÄISCHE PATENTSCHRIFT

(11) **EP 0 428 786 B1**
(45) Veröffentlichungstag und Bekanntmachung des Hinweises auf die Patenterteilung: **01.02.1995**
(21) Anmeldenummer: 89121743.2
(22) Anmeldetag: 24.11.1989
(51) Int. Cl.: B32B 19/06, B60R 13/08

(54) **Geräuschdämmende Verkleidung für den Motorraum von Kraftfahrzeugen sowie Verfahren zu seiner Herstellung**
Sounds reducing cladding for the engine compartment of a motor vehicle, and method for its manufacture
Revêtement d'atténuation de bruit pour le compartiment du moteur d'une automobile et son procédé de fabrication

(43) Veröffentlichungstag der Anmeldung: 29.05.1991
(73) Patentinhaber: Deutsche Basaltsteinwolle GmbH, 37120 Bovenden (DE)
(72) Erfinder: Türk, Hans-Georg, 3412 Nörten-Hardenberg (DE)
(74) Vertreter: Rehberg, Elmar, Dipl.-Ing.

(56) Entgegenhaltungen:
- EP-A- 0 058 489
- EP-A- 0 162 645
- EP-A- 0 229 977
- DE-A- 3 734 239

## Beschreibung

Die Erfindung bezieht sich auf eine geräuschdämmende Verkleidung für den Motorraum von Kraftfahrzeugen, bestehend aus einem Formkörper aus mehreren Lagen, die unter Einwirkung von Wärme und Druck und unter Zusatz eines Verbindungsmittels miteinander verbunden sind, wobei eine Lage aus einem anorgischen, thermisch hochbelastbaren durch ein Bindemittel gebundenen Fasermaterial besteht.

Eine geräuschdämmende Verkleidung der eingangs beschriebenen Art ist aus der DE-OS 36 01 204 bekannt. Der dortige Formkörper ist mindestens dreilagig aufgebaut und weist eine erste, zum Motor weisende Lage aus einem thermisch hochbelastbaren Kunststoff-Fasermaterial auf. Als Kunststoffe werden Polybenzimidazole, Aramide, Polyimide usw. genannt. Die zweite Lage besteht aus einem anorganischen Fasermaterial, z. B. aus Schlacken-, Gesteins- oder auch Glasfasern, insbesondere aus Basaltwolle. Die dritte Lage besteht aus einem textilen Fasermaterial. Das Kunststoff-Fasermaterial ist in relativ dünner Schichtdicke vorgesehen. Es bietet gleichsam nur einen Rieselschutz, ist aber selbst nicht abriebfest. Durch die Verwendung von Kunststoffen als Kunststoff-Fasermaterial ist der Temperaturbereich, in welchem solche Verkleidungen Anwendung finden können, auf unter 300°C beschränkt. Oft aber herrschen im Motorraum von Kraftfahrzeugen höhere Temperaturen, so daß diese bekannten Formkörper beschädigt und teilweise zerstört werden. Auch ist das textile Fasermaterial brennbar. Insbesondere bei langer Temperatureinwirkung besteht die Gefahr, daß die Verkleidung in Brand gerät. Zur Verbindung der Fasern in jeder Schicht oder Lage, also untereinander, werden Bindemittel eingesetzt, die innerhalb der Fasern dispergiert sind. Um die verschiedenen Schichten miteinander zu verbinden, können wärmeaktivierbare Klebstoffolien als Verbindungsmittel zwischen die einzelnen Lagen gelegt werden. Der hierdurch erzielbare Zusammenhalt zwischen den Lagen läßt jedoch zu wünschen übrig. Er geht insbesondere bei höherer thermischer Belastung weitgehend verloren.

Aus der DE-OS 29 37 399 ist ein Verkleidungs- oder Abdeckungsteil für Fahrzeuge bekannt, bei dem zwei Lagen aus Kunststoffasern, insbesondere Polyesterfasern und Acrylfasern mit einem Kunstharz, insbesondere Polyesterharz, auf den einander zugekehrten Flächen beschichtet und so über dieses Verbindungsmittel unter Einwirkung von Wärme und Druck miteinander verbunden werden. Dabei verteilt sich das Verbindungsmittel auch in den beiden Lagen zwischen den Kunststoffasern und wirkt hier als Bindemittel. Dieses Verkleidungs- und Abdeckteil aus Kunststoffasern weist neben einer guten Formstabilität eine verbesserte Elastizität, Rückfederungskraft sowie eine hohe Beständigkeit gegen Feuchtigkeitseinflüsse auf. Bei erhöhten Temperaturbelastungen kann es aufgrund der eingesetzten Kunststoffasern keine Verwendung finden.

Aus dem DE-Buch: "Kunststoff-Lexikon", Carl Hanser Verlag, 7. Aufl., sind unter den Stichworten "Kohlefasern und -fäden" Materialien bekannt, die nicht brennbar und fast bis 2.000°C wärmebeständig sind. Es wird die Verwendung für duroplastische Schichtstoffe hoher mechanischer und thermischer Festigkeit empfohlen. Melaminharze werden als Leimharze für Langzeitgebrauch bis etwa 250°C und kurzzeitig sogar bis 300°C empfohlen. Dabei geht es jedoch in erster Linie um die Erstellung fester Körper wie z. B. Schichtpreßstoffen, wie sie in der Möbelindustrie Verwendung finden.

Aus dem DE-GM 87 11 301 ist ein faserverstärkter, hochtemperaturstabiler, plattenförmiger Werkstoff bekannt, bei dem Kohlenstoffasern eingesetzt werden, um Formkörper herzustellen, wie sie beispielsweise für die Kapselung von Motorräumen an Kraftfahrzeugen Verwendung finden.

Aus dem DBGM 86 13 009 ist eine Schalldämmplatte aus einem Kunststoffaservlies und einem Kunststoffschaum bekannt, wobei diese beiden Lagen vermittels eines Polyurethanschaums oder auch eines Melaminschaums als Verbindungsmittel miteinander verbunden werden. Die genannten Schäume werden als Verbindungsmittel auf die Lagen aufgetragen, was auch linienförmig geschehen kann. Es wird damit eine Schalldämmplatte geschaffen, die im Motorraum eines Kraftfahrzeugs eingesetzt werden kann und im wesentlichen der Geräuschdämmung dient. Infolge des hohen Kunststoffanteils ist diese Platte nicht für eine nennenswerte Temperaturbelastung geeignet.

Der Erfindung liegt die Aufgabe zugrunde, eine geräuschdämmende Verkleidung der eingangs beschriebenen Art derart weiterzubilden, daß sie bei guter geräuschdämmender und thermischer Isolierung bis in einen Temperaturbereich von etwa 500°C anwendbar wird. Es soll weiterhin ein Verfahren aufgezeigt werden, mit welchem derartige Formkörper herstellbar sind.

Die geräuschdämmende Verkleidung kennzeichnet sich erfindungsgemäß dadurch, daß die zum Motor weisende Lage aus einem thermisch hochbelastbaren, nicht durch ein Bindemittel gebundenen Kohle-Fasermaterial besteht, und daß das Verbindungsmittel melaminharzhaltig ist. Die neue Verkleidung gestattet die Herstellung von Formkörpern, die als ebene Platten oder aber auch mit gekrümmten, dem Kraftfahrzeug angepaßten Flächenbereichen versehen sind. Die Verkleidung weist einen mindestens zweischichtigen Aufbau auf, wobei die höher beanspruchte Lage aus Kohle-Fasermaterial besteht, welches in durchaus geringer vergleichbarer Wanddicke vorgesehen sein mag. Die zweite Lage besteht wie bisher aus anorganischem Fasermaterial, also insbesondere aus Basaltwolle. Von entscheidender Bedeutung für einen guten Verbund zwischen den Lagen, der auch nach erhöhter Temperatureinwirkung noch gegeben ist, ist die Verwendung eines melaminharzhaltigen Verbindungsmittels zwischen diesen beiden Lagen. Überraschenderweise ist dieses Verbindungsmittel ausreichend thermisch stabil, so daß sich die verschiedenen Lagen nicht voneinander lösen. Bei einer gewaltsamen Zerstörung werden eher die beiden Lagen in ihrem inneren Verbund aufgehoben, während die Verbindung zwischen den Lagen erhalten bleibt. Die Verwendung von Kohle-Fasermaterial ist auch insofern vorteilhaft, als dieses Material kein Bindemittel benötigt, um den Zusammenhalt der Kohle-Fasern in der Lage sicherzustellen. Es genügt, hierbei Kohle-Fasern einzusetzen, die in der bekannten Vernadelungstechnik zu einem Vlies geformt werden. Ein solches Vlies aus Kohle-Fasermaterial gewährleistet auch eine angenehme und sichere Handhabung des Formkörpers. Der Zusammenhalt der Kohle-Fasern ist völlig ausreichend und ein Loslösen von Fasermaterial ist nicht zu erwarten. Ein derart mindestens zweischichtig aufgebauter Formkörper weist gute Weiterverarbeitungseigenschaften auf. Er läßt sich leicht montieren. Andererseits kann er aber auch in einfacher Weise hergestellt werden, indem das besondere Verbindungsmittel auf das Kohle-Faservlies aufgetragen und anreagiert wird. Diese Lage aus Kohle-Fasermaterial läßt sich dann zu einem beliebigen Zeitpunkt mit einer Lage aus anorganischem Fasermaterial verbinden.

Es ist auch möglich, daß das anorganische Fasermaterial auf beiden Seiten mit je einer Schicht aus Kohle-Fasermaterial versehen ist. Dies gewährleistet auch einen gewissen Schutz des anorganischen Fasermaterials nach der Rückseite des Formkörpers, wobei es hier in der Regel auf die thermische Belastbarkeit nicht in der Weise ankommt wie im Bereich der dem Motor zugekehrten Lage.

Das Verbindungsmittel zwischen den Lagen kann in Punkt- oder Streifenform auf die Lage aus Kohle-Fasermaterial aufgebracht sein. Dies genügt völlig für einen dauerhaften Verbund der Lagen. Durch diese besondere Art der Aufbringung wird gleichzeitig erreicht, daß das Verbindungsmittel in ausreichender Schichtdicke an den Verbindungsstellen zur Verfügung steht, um den Verbund zu der jeweils anderen Lage herzustellen. Das Verbindungsmittel kann in einem Flächengewicht von etwa 10 bis 80 g/m2 aufgebracht sein. Damit ist trotz sparsamer Verwendung des Verbindungsmittels ein ausreichender Verbund zwischen den Lagen hergestellt.

Die Lage aus Kohle-Fasermaterial kann ausschließlich aus diesem Material bestehen. Es ist jedoch auch möglich, hier eine Mischung mehrerer Materialien einzusetzen. So kann die Lage aus Kohle-Fasermaterial zusätzlich Polyacrylsulfone, Aramide, Polyimide o. dgl. enthalten. Die Lage sollte jedoch einen überwiegenden Anteil an Kohle-Fasermaterial aufweisen.

Die Lage aus anorganischem Fasermaterial kann eine Dichte von 80 bis 200 kg/m3 aufweisen. Die Höhe dieses Raumgewichts wird an die zu erbringende schalldämmende Wirkung angepaßt.

Das Verfahren zur Herstellung eines mehrlagigen, geräuschdämmenden Formkörpers als Verkleidung des Motorraums von Kraftfahrzeugen geht davon aus, daß eine Lage aus einem anorganischen, thermisch hochbelastbaren, mit einem Bindemittel versehenen Fasermaterial mit einer weiteren Lage aus thermisch hochbelastbarem Fasermaterial unter Einwirkung von Wärme und Druck und unter Zusatz eines Verbindungsmittels verbunden wird. Erfindungsgemäß findet als weitere Lage eine Lage aus nicht mit einem Bindemittel versehenen Kohle-Fasermaterial Verwendung, auf die ein melaminharzhaltiges Verbindungsmittel aufgebracht und anreagiert wird; die beiden Lagen werden unter Anwendung der Wärme und des Drucks zur Aktivierung des melaminharzhaltigen Verbindungsmittels miteinander verbunden und dabei erfährt die eine Lage auch eine Gestaltverfestigung. Das melaminharzhaltige Verbindungsmittel ist dabei so eingestellt, daß es nach seinem Auftragen auf die Lage des Kohle-Fasermaterials, beispielsweise in genadelter Vliesform, anreagiert wird. Es läßt sich dann aufrollen und handhaben sowie lagern. Erst wenn diese Lage aus Kohle-Fasermaterial mit der weiteren Lage aus dem anorganischen Fasermaterial in Kontakt kommt und unter Wärmeeinwirkung versetzt wird, wird das melaminharzhaltige Verbindungsmittel aktiviert und es erfolgt der Verbund der beiden Lagen. Dies ist eine äußerst einfache und verarbeitungsfreundliche Möglichkeit. Während die beiden Lagen unter Wärme und Druck gesetzt werden, ist auch die spezielle Formpressung des Formkörpers in der gewünschten räumlichen Gestalt möglich.

Das Verbindungsmittel kann in Punkt- oder Streifenform auf die Lage aus Kohle-Fasermaterial aufgebracht werden. Eine vollflächige Beschichtung ist im allgemeinen nicht erforderlich. Ein punktueller Auftrag hat vielmehr den Vorteil, daß das Verbindungsmittel auch eine gewisse Schichtdicke aufweist, der eine größere Bedeutung zukommt als ein vollflächiger Auftrag auf diese Lage.

Die Lage aus Kohle-Fasermaterial kann schließlich noch hydrophob und oleophob ausgestattet werden, damit die Dämmwirkung unter Einwirkung von Wasser und/oder Öl nicht leidet.

Ausführungsbeispiele der Erfindung sind in den Zeichnungen dargestellt und werden im folgenden weiter beschrieben. Es zeigen:
- Figur 1: einen Schnitt durch einen Formkörper in einer ersten Ausführungsform,
- Figur 2: einen Ausschnitt aus dem Schichtenaufbau eines weiteren Formkörpers in vergrößernder Darstellung und
- Figur 3: einen Ausschnitt des Schichtenaufbaus bei einem als Platte ausgebildeten Formkörper.

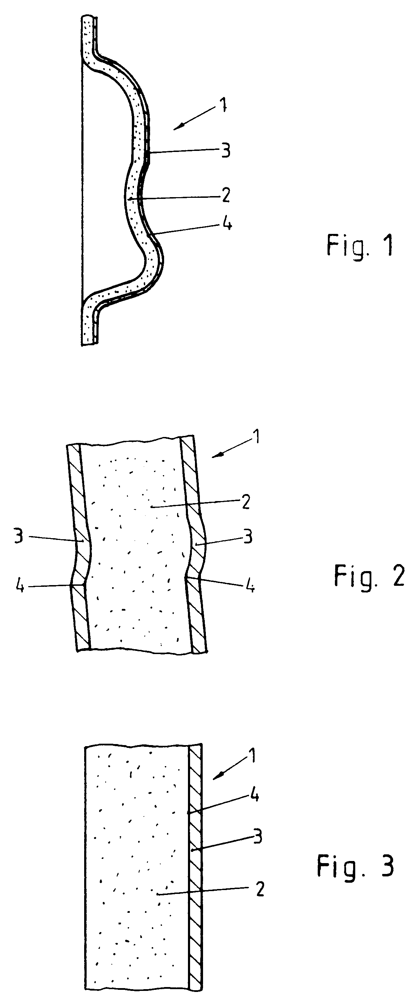

Der in Figur 1 dargestellte Formkörper ist verkleinernd dargestellt. Er besitzt eine unregelmäßige Gestalt, die der Formgebung des Kraftfahrzeugs an der entsprechenden Anordnungsstelle des Formkörpers angepaßt ist. Der Formkörper 1 besitzt zwei Lagen, nämlich eine erste Lage 2 aus anorganischen Fasermaterial. Hier können Gesteinsfasern, Keramikfasern, Quarz- oder auch Glasfasern eingesetzt werden, die durch ein Bindemittel gestaltverfestigt sind. Es versteht sich, daß die Bindemittel die entsprechende Temperaturbeständigkeit aufweisen kann. Auf der Seite, auf welcher der Formkörper 1 dem Motor bzw. der Wärmequelle zugekehrt ist, ist eine zweite Lage 3 aus Kohle-Fasermaterial vorgesehen. Es handelt sich dabei um einen Nadelvlies, zu dessen Herstellung Stapel- oder Schnittfasern eingesetzt werden. Es ist auch möglich, Gewirke oder Gewebe aus endlosen Kohle-Fasern zu erstellen und als weitere Lage 3 zu benutzen. Gewebe sind jedoch vergleichsweise wenig dehnbar, so daß für den Fall, daß unregelmäßig geformte Formkörper mit dreidimensionaler Oberfläche geschaffen werden müssen, bevorzugt Nadelvliese als Kohle-Fasermaterial eingesetzt werden, die eine faltenfreie Formgebung ermöglichen, weil sie mehrdimensional verformbar und dabei streckbar sind. Zwischen den beiden Lagen 2 und 3 wird ein melaminharzhaltiges Verbindungsmittel 4 angewendet, welches den Zusammenhalt zwischen den beiden Lagen 2 und 3 sichert. Es versteht sich, daß die endgültige Formgebung in gemeinsamer Verformung der beiden Lagen 2 und 3 geschieht, wobei auch der Verbund über das Verbindungsmittel 4 zwischen den Lagen hergestellt wird. Die Lage 2 aus anorganischem Fasermaterial weist ein Bindemittel auf, welches den Zusammenhalt dieser anorganischen Fasern nach der Aushärtung sicherstellt. Die Lage 3 aus Kohle-Faser benötigt kein eigenes Bindemittel. Es genügt hierbei, diese Lage 3 als Vlies zu nadeln und entsprechende Abschnitte dieses Vlieses bei der Formgebung der Formkörper einzusetzen. Das Verbindungsmittel 4 muß nicht vollflächig aufgetragen werden. Ein Auftrag in Punkt- und Streifenform ist völlig ausreichend, ja sogar vorteilhaft, weil auf diese Art und Weise die Schichtdicke des Verbindungsmittels 4 an den ausgewählten Stellen erhöht werden kann.

Figur 2 zeigt einen Aufbau aus einem Formkörper etwa in natürlicher Größe, wobei die Lage 2 aus anorganischem Fasermaterial auf beiden Seiten mit je einer Lage 3 aus Kohle-Fasermaterial versehen ist. Dies stellt auch einen gewissen Schutz der vergleichsweise empfindlichen Lage 2 aus anorganischem Fasermaterial dar. Auch hier wird der Verbund der Lagen 2 und 3 untereinander durch das melaminharzhaltige Verbindungsmittel 4 hergestellt. Überraschenderweise verliert dieses Verbindungsmittel seine Festigkeit auch nicht nach längerer Wärmeeinwirkung. Ein solcher Formkörper ist bis in einen Temperaturbereich von 500°C einsetzbar, ohne daß die Gefahr eines Brands des Formkörpers besteht. Textile Schichten werden dabei vermieden.

Figur 3 zeigt einen Ausschnitt aus einem plattenförmig ausgebildeten Formkörper 1, wobei hier die Lage 3 aus Kohle-Fasermaterial nur einseitig angeordnet ist. Diese Lage 3 kann bei diesem, wie auch bei den anderen Ausführungsbeispielen, auch nur teilweise aus Kohle-Fasermaterial bestehen. Zusätzlich können Kunststoffanteile, insbesondere Aramide und Polyimide, vorgesehen sein. An besonders hochbelastbaren Stellen wird man jedoch das Kohle-Fasermaterial allein einsetzen.

Die Herstellung eines derartigen Formkörpers ist besonders einfach. Die Kohle-Fasern werden als Schnittfasern oder als Stapelfasern zu einem Vlies über die Länge und Breite konstanter Dicke vernadelt und mit dem melaminharzhaltigen Verbindungsmittel 4 in Punkt- oder Streifenanordnung bedruckt. Es erfolgt ein Anreagieren dieses Verbindungsmittels 4. Die Lage 3 kann auf Rolle gewickelt und gelagert werden. Sie wird mit einer Lage 2 aus anorganischem Fasermaterial zusammengefügt, wobei auch abschnittsweise bzw. zuschnittsweise gearbeitet werden kann. Das anorganische Fasermaterial ist zweckmäßig mit einem Bindemittel versetzt. Unter Einwirkung von Wärme und Druck, beispielsweise in einer Preßform, werden die beiden Lagen 2 und 3 miteinander verbunden, wobei die Wärmeeinwirkung die Gestaltverfestigung in der Lage 2 aus anorganischem Fasermaterial herbeiführt und zugleich den Verbund zwischen den beiden Lagen 2 und 3 sicherstellt. Dabei kann die Formgebung so gewählt werden, daß der Formkörper nahezu allseitig von der Lage 3 eingeschlossen ist. Nach dem Aushärten ist der Formkörper 1 einsatzfähig. Er läßt sich in einfacher Weise handhaben und montieren. Die äußere Lage 3 weist einen angenehmen Griff auf, der sich deutlich von demjenigen von Formkörpern lediglich aus Steinwolle unterscheidet.

## Patentansprüche

1. Geräuschdämmende Verkleidung für den Motorraum von Kraftfahrzeugen, bestehend aus einem Formkörper aus mehreren Lagen, die unter Einwirkung von Wärme und Druck und unter Zusatz eines Verbindungsmittels miteinander verbunden sind, wobei eine Lage aus einem anorganischen, thermisch hochbelastbaren , durch ein Bindemittel gebundenen Fasermaterial besteht, dadurch gekennzeichnet, daß die zum Motor weisende Lage (3) aus einem thermisch hochbelastbaren, nicht durch ein Bindemittel gebundenen Kohle-Fasermaterial besteht, und daß das Verbindungsmittel (4) melaminharzhaltig ist.

2. Verkleidung nach Anspruch 1, dadurch gekennzeichnet, daß das anorganische Fasermaterial auf beiden Seiten mit je einer Lage (3) aus Kohle-Fasermaterial versehen ist.

3. Verkleidung nach Anspruch 1, dadurch gekennzeichnet, daß das Verbindungsmittel (4) in Punkt- oder Streifenform auf die Lage (3) aus Kohle-Fasermaterial aufgebracht ist.

4. Verkleidung nach Anspruch 3, dadurch gekennzeichnet, daß das Verbindungsmittel (4) in einem Flächengewicht von 10 ... 80 g/m2 aufgebracht ist.

5. Verkleidung nach Anspruch 1, dadurch gekennzeichnet, daß die Lage (3) aus Kohle-Fasermaterial zusätzlich Polyacrylsulfone, Aramide, Polyimide o. dgl. enthält.

6. Verkleidung nach Anspruch 1, dadurch gekennzeichnet, daß die Lage (2) aus anorganischem Fasermaterial eine Dichte von 80 bis 200 kg/m3 aufweist.

7. Verfahren zur Herstellung eines mehrlagigen, geräuschdämmenden Formkörpers als Verkleidung des Motorraums von Kraftfahrzeugen, bei dem eine Lage aus einem anorganischen, thermisch hochbelastbaren, mit einem Bindemittel versehenen Fasermaterial mit einer weiteren Lage aus thermisch hochbelastbarem Fasermaterial verbunden wird, dadurch gekennzeichnet, daß als weitere Lage eine Lage (3) aus nicht mit einem Bindemittel versehenen Kohle-Fasermaterial Verwendung findet, auf die ein melaminharzhaltiges Verbindungsmittel (4) aufgebracht und anreagiert wird, und daß die beiden Lagen (2, 3) unter Anwendung von Wärme und Druck sowie unter Aktivierung des melaminharzhaltigen Verbindungsmittels (4) miteinander verbunden werden, und dabei die eine Lage (2) eine Gestaltverfestigung erfährt.

8. Verfahren nach Anspruch 7, dadurch gekennzeichnet, daß das Verbindungsmittel (4) in Punkt- oder Streifenform auf die Lage (3) aus Kohle-Fasermaterial aufgebracht wird.

9. Verfahren nach Anspruch 7, dadurch gekennzeichnet, daß die Lage (3) aus Kohle-Fasermaterial hydrophob und oleophob ausgestattet wird.

## Claims

1. A sound reducing liner for the engine bay of motor vehicles, the liner consisting of a shaped body having a plurality of layers which are joined to each other under the influence of heat and pressure with the addition of a binding compound, where one of the layers consists of an inorganic, thermally loadable fiber material which is bound by a binder, **characterized in that** the layer (3) facing the motor is made of a thermally loadable carbon-fiber material which is not bound by a binder, and where binding compound (4) contains melamine resin.

2. The liner of claim 1, **characterized in that** a layer (3) of carbon-fiber material is provided on each side of the inorganic fiber material.

3. The liner of claim 1, **characterized in that** binding compound (4) is applied to the layer (3) of carbon-fiber material as dots or stripes.

4. The liner of claim 3, **characterized in that** binding compound (4) is applied with a density of 10 to 80 g/m².

5. The liner of claim 1, **characterized in that** layer (3) of carbon-fiber material also contains polyacrylic sulfones, aramides, polyimides, or the like.

6. The liner of claim 1, **characterized in that** the layer (2) of inorganic fiber material has a density of 80 to 200 kg/m³.

7. A process for making a multilayered, sound reducing shaped body to be used as a liner for the engine bay of motor vehicles, in which a layer of an inorganic, thermally loadable fiber material which is bound by a binder and combined with a second layer of thermally loadable fiber material, **characterized in that** the second layer is a layer (3) of carbon-fiber material which is not bound by a binder, to which a binding compound (4) containing melamine resin is applied and pre-reacted, where layers (2, 3) are joined to each other under the influence of heat and pressure coupled with the activation of binding compound (4) containing melamine resin, wherein one layer (2) is hardened.

8. The process of claim 7, **characterized in that** binding compound (4) is applied to layer (3) of carbon-fiber material as dots or stripes.

9. The process of claim 7, **characterized in that** layer (3) of carbon-fiber material is made to be hydrophobic and oleophobic.

## Revendications

1. Habillage insonorisant pour le compartiment moteur de véhicules, consistant en un corps moulé en plusieurs couches qui sont liées entre elles par action de la chaleur et de la pression, avec addition d'un adhésif, une des couches consistant en un matériau fibreux inorganique, à haute résistance thermique, lié par un liant,
**caractérisé** en ce que la couche (3) tournée vers le moteur est constituée d'un matériau à haute résistance thermique à libres de carbone, non lié par un liant, et en ce que l'adhésif (4) contient de la résine mélamine.

2. Habillage selon la revendication 1, caractérisé en ce que le matériau fibreux inorganique est muni sur chacune de ses deux faces d'une couche (3) en matériau à libres de carbone.

3. Habillage selon la revendication 1, caractérisé en ce que l'adhésif (4) est appliqué par points ou en bandes sur la couche (3) en matériau à libres de carbone.

4. Habillage selon la revendication 3, caractérisé en ce que l'adhésif (4) est appliqué à raison de 10 à 80g/m².

5. Habillage selon la revendication 1, caractérisé en ce que la couche (3) de matériau à libres de carbone contient, en supplément, du polyacrylsulfone, de l'aramide, un polyimide ou similaire.

6. Habillage selon la revendication 1, caractérisé en ce que la couche (2) en matériau fibreux inorganique présente une densité de 80 à 200kg/m³.

7. Procédé de fabrication d'un corps moulé insonorisant en plusieurs couches en tant qu'habillage du compartiment moteur de véhicules, dans lequel une couche d'un matériau fibreux inorganique à haute résistance thermique, munie d'un liant, est liée à une autre couche de matériau fibreux à haute résistance thermique,
**caractérisé** en ce qu'on utilise comme autre couche une couche (3) de matériau à fibres de carbone non munie de liant, sur laquelle est appliqué un adhésif (4) contenant de la résine de mélamine que l'on fait réagir, et en ce que les deux couches (2, 3) sont liées l'une à l'autre en utilisant la chaleur et la pression ainsi que par activation de l'adhésif (4) contenant de la résine de mélamine, et que, de ce fait, la couche (2) subit un durcissement dans sa forme.

8. Procédé selon la revendication 7, caractérisé en ce que l'adhésif (4) est appliqué sous la forme de points ou de rubans sur la couche (3) en matériau à fibres de carbone.

9. Procédé selon la revendication 7, caractérisé en ce que la couche (3) en matériau à fibres de carbone est dotée de propriétés hydrophobes et oléophobes.
